# EUROPEAN PATENT APPLICATION

(11) **EP 2 194 437 A1**
(43) Date of publication of application: **09.06.2010**
(21) Application number: 08170997.4
(22) Date of filing: 08.12.2008
(51) Int. Cl.: G06F 1/16

(54) **Optimized keyboard for handheld thumb-typing and touch-typing**

(71) Applicant: Research In Motion Limited, Waterloo, Ontario N2L 3W8 (CA)
(72) Inventor: Griffin, Jason T., Waterloo Ontario N2L 3W8 (CA); Ladouceur, Norman M., Waterloo Ontario N2L 3W8 (CA); Rak, Roman P., Waterloo Ontario N2L 3W8 (CA); Fyke, Steven, Waterloo Ontario N2L 3W8 (CA)
(74) Representative: Fennell, Gareth Charles

(57) **Abstract**

A keyboard optimized for handheld thumb-typing and conventional desktop touch-typing includes a reduced key keyboard having a plurality of keys each having at least an alphabetic character, a numeral, or a command indicia. The keyboard has a width greater than about 100 millimeters and less than about 160 millimeters, and each key has a width that is approximately 10 millimeters to 16 millimeters. The alphabetic keys are arranged such that when a user cradles the device in his/her hands he/she can actuate a first subset of the keys on the left of a vertical center line with his/her left thumb and can actuate a second subset of the keys on the right side of the vertical centerline with his/her right thumb. The keys are also positioned such that when the user places the device on a desktop surface, the user can type on the keyboard by conventional finger touch-typing.

## Description

### FIELD OF TECHNOLOGY

The present disclosure relates generally to keyboards. More specifically, the present disclosure relates to optimized keyboards for handheld thumb-typing and touch-typing on a device.

### BACKGROUND

With the advent of more robust handheld electronic systems, advancements of handheld electronic devices are becoming more prevalent. Handheld electronic devices can provide a variety of functions including, for example, telephonic, electronic messaging and other personal information manager (PIM) application functions. Handheld electronic devices include mobile stations such as simple cellular telephones, smart telephones, wireless PDAs, and reduced-sized laptop computers.

Such handheld devices allow the user to enter data into text messages, email messages, address books, calendars, task lists, and other similar text files. To facilitate text entry, prior handheld electronic devices have provided the user with a keypad having a minimal number of keys, but with keys representing the alphabet generally placed in the same order as they would appear on a standard keyboard, such as in the QWERTY keyboard layout. The use of a keyboard layout that is familiar to the user enables the user to immediately use the device without having to hunt for the keys he wishes to use. However, such devices provide keyboards that are designed to be used substantially by the user's thumbs. While this keyboard configuration is more accurate and faster to use than "hunt and peck" typing, it is not optimized for both thumb-typing and conventional finger typing (i.e. touch-typing). Furthermore, handheld devices having keyboards configured for thumb-typing are often too small to be used for touch-typing as well. These devices are to be used while the device is cradled in the user's hands rather than while the user places the device on a desktop for conventional finger-typing. If one were to perform touch-typing on a keyboard optimized for only thumb-typing, the user's hands might feel discomfort because the keys are either too small or spaced together too closely for comfortable touch-typing. Also, because of the smaller keyboard and smaller space between the keys, touch-typing on a keyboard optimized for thumb-typing results in increased typing errors and user frustration.

On the other hand, devices optimized for touch-typing are often too large for comfortable thumb-typing because the size of the keyboards are too large for comfortable hand cradling and thumb reach during thumb-typing. Such devices include mini-laptops, notebooks, or compact laptops. Although these devices are small enough for convenient carrying by the user, the keyboards on these devices are optimized for only touch-typing. Additionally, these keyboards allow for landscape mode typing, normally on a desktop, which presents a physically larger key typing array than the conventional portrait mode typing which is typical of handheld devices designed for thumb-typing. With the mini-laptop keyboard, the user can easily and comfortably enter text using conventional touch-typing. This larger mini-laptop keyboard, however, does not facilitate comfortable and easy thumb-typing because the keys are spaced such that the center keys are too far for the average-person's thumbs to comfortably reach.

While there are compact keyboards having a full standard keyboard layout, this layout is more difficult to use when scaled down to fit onto a smaller device due to the condensed key spacing and physically smaller keys. Thus, there remains a need for a keypad layout that is large enough for comfortable and accurate touch-typing but also small enough for comfortable and accurate thumb-typing when the device is cradled in the user's hands. The result is a need for a reduced key array optimized keyboard that facilitates both handheld thumb-typing and desktop touch-typing.

### BRIEF DESCRIPTION OF THE DRAWINGS

Embodiments of the present application will now be described, by way of example only, with reference to the attached Figures, wherein:

FIG. 1 illustrates an exemplary keyboard optimized for both handheld thumb-typing and touch-typing, but with thumb-typing being shown;

FIG. 2 illustrates the keyboard of FIG. 1 being used for touch-typing;

FIG. 3 illustrates another exemplary keyboard optimized for handheld thumb-typing and touch-typing having a split key layout shown being used for thumb-typing;

FIG. 4 illustrates another exemplary keyboard optimized for handheld thumb-typing and touch-typing including a pair of navigational buttons shown at lower lateral sides of the space bar;

FIG. 5 illustrates an exemplary keyboard optimized for handheld thumb-typing and touch-typing including a trackball assembly shown centered below the space bar;

FIG. 6 illustrates another exemplary embodiment of a keyboard optimized for handheld thumb-typing and touch-typing and having a tapered bottom portion;

FIG. 7A depicts an exemplary embodiment of a handheld device having a keyboard optimized for handheld thumb-typing and touch-typing in an open position;

FIG. 7B shows the exemplary embodiment of FIG. 7A in a closed position;

FIG. 8A depicts an exemplary embodiment of a handheld device having a tapered keyboard optimized for handheld thumb-typing and touch-typing in an open position;

FIG. 8B shows the exemplary embodiment of FIG. 8A in a closed position;

FIG. 8C shows another exemplary embodiment of a device having a keypad that is narrower than the viewing screen;

FIG. 9 depicts another exemplary embodiment of a handheld device having a keyboard including a majority of oval shaped keys and optimized for handheld thumb-typing and touch-typing;

FIG. 10A is a side perspective view of another exemplary embodiment of a handheld device having a keyboard including a pair of grips positioned at an opposite face of the device from the keyboard optimized for handheld thumb-typing and touch-typing;

FIG. 10B is a side perspective view of another exemplary embodiment of a handheld device having a keyboard including a pair of rounded grips positioned at an opposite face of the device from the keyboard optimized for handheld thumb-typing and touch-typing; and

FIG. 10C is a side perspective view of another exemplary embodiment of a handheld device having a keyboard including finger stops indented at an opposite face of the device from the keyboard optimized for handheld thumb-typing and touch-typing.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein.

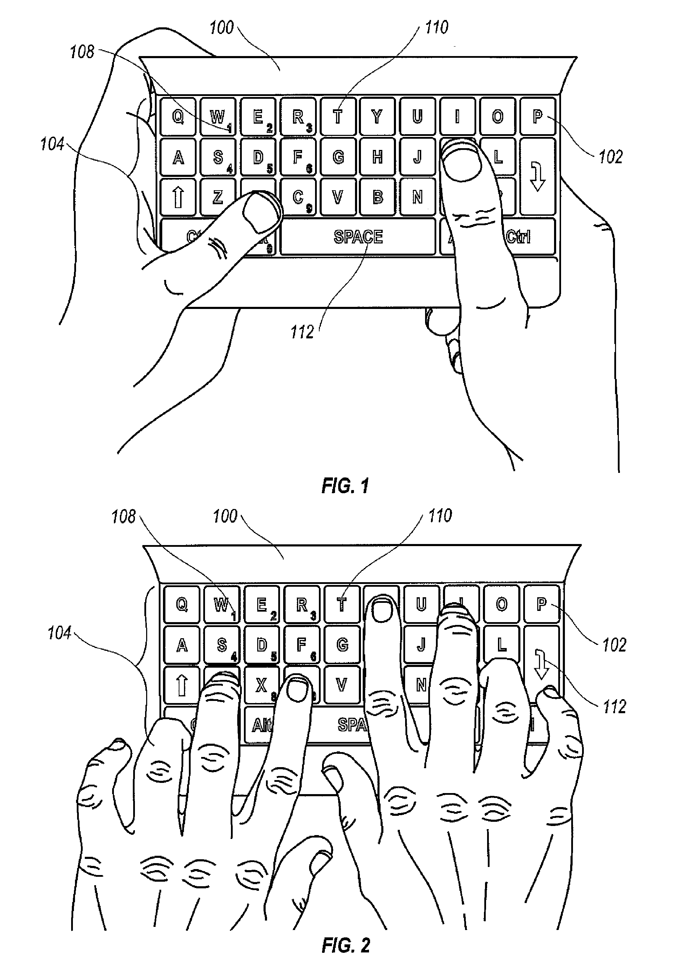

FIGS. 1 and 2 depict a keyboard **100** for a handheld electronic device that is optimized for thumb-typing and conventional touch-typing. The keyboard **100** has a plurality of keys **102.** While the keys **102** of the illustrated keyboard **100** are arranged in a grid of a plurality of columns and a plurality of rows, the arrangement of the keys **102** can be in other arrangements as will be described herein. Each key **102** is associated with at least one indicia representing an alphabetic character **110,** a numeral **108,** or a command **112** (such as a space command, return command, or the like). The plurality of the keys **102** having alphabetic characters **110** are arranged in a standard keyboard layout **104.** This standard keyboard layout **104** can be a QWERTY layout (shown), a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of this disclosure. The keyboard layout **104** can be based on the geographical region in which the handheld device is intended for sale. In some examples, the keyboard can be interchangeable such that the user can switch between layouts.

The plurality of keys **102** having alphabetic characters **110** can also have numeric indicia **108.** Such keys **102** can have the numerals **108** arranged in a telephone keyboard layout, such as one according to ITU Standard E.161. In an alternative embodiment, the numerals **108** can be arranged in a calculator-style layout. In yet another alternative embodiment, there can be keys **102** bearing only numerals **108** that are separate from the keys **102** bearing alphabetic characters **110.** In a further embodiment, the numerals **108** can be located on the keys **102** of a top row of the keyboard **100.**

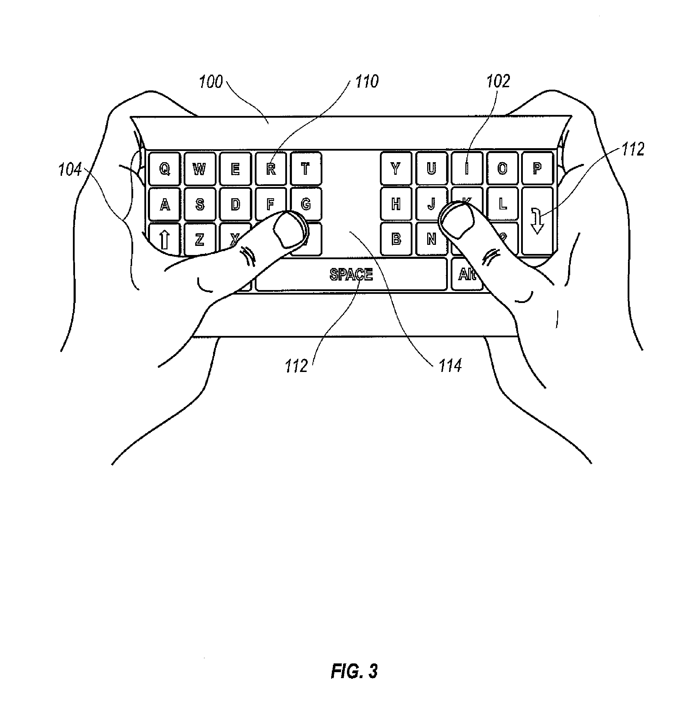

As shown in FIG. 1, the keyboard **100** has dimensions such that a user can cradle the keyboard **100** in his hands and actuate the keys **102** comfortably by thumb-typing. Additionally, and as shown in FIGS. 2 and 3, the keyboard **100** is also dimensioned to allow the user to place the keyboard **100** on a desktop and comfortably actuate the keys **102** by touch-typing or conventional finger typing.

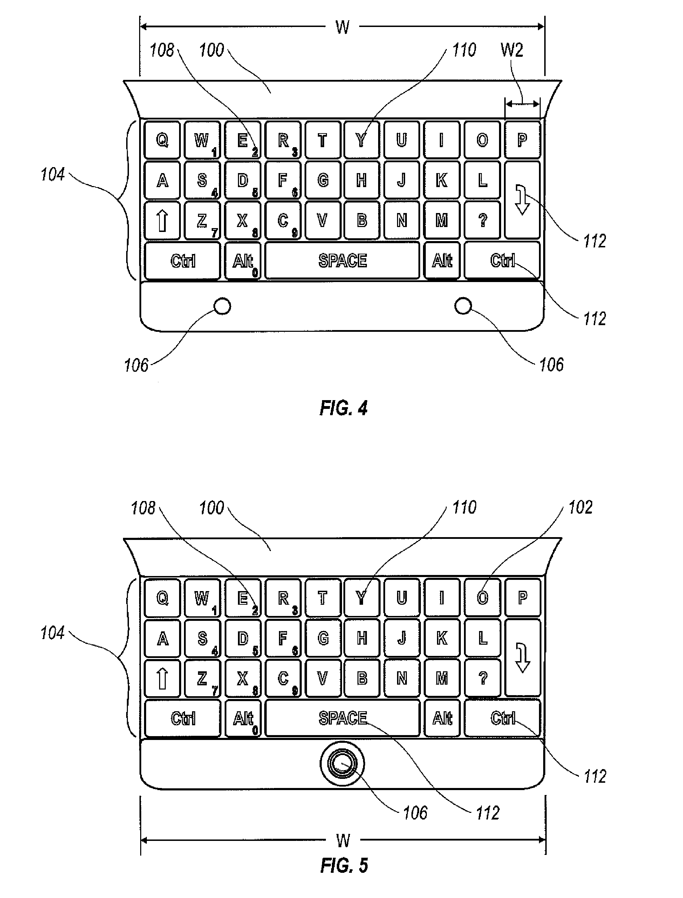

As depicted in FIG. 4, the keyboard **100** is optimized for handheld thumb-typing and desktop touch-typing and has a width (W) that accommodates the hands of a fifty percentile female as well as the hands of a fifty percentile male. Therefore, to accommodate the hands and thumb reach of the average female and male user, an exemplary range of keyboard widths (W) is greater than about 100 millimeters and less than about 160 millimeters.

With such dimensions, the average female or male user can comfortably use the keyboard **100** for thumb-typing when cradling the device in his or her hands and can also comfortably use the keyboard **100** for conventional touch-typing when placing the device on a desktop or other surface. To further facilitate comfortable dual typing methods on the keyboard **100,** the individual keys **102** can have a width (W2) that is between approximately eight millimeters to sixteen millimeters. With such widths of the individual keys **102,** there is enough space between each key **102** so that when the user touch-types, he does not feel like his hands are cramped and does not worry about inaccurate typing using the keyboard **100.** Also, with these individual key widths (W2), the user can cradle the device in his hands and comfortably reach each key **102** using his thumbs without worrying about inaccurately typing text or pressing more than one key **102** with a single thumb engagement.

In these compact electronic devices, the keyboard **100** can have a layout **104** using fewer keys **102** than a conventional desktop or laptop keyboard. Such reduced keyboard layouts **104** can have ten or fewer keys **102** in each row. This arrangement can be such that it forms ten columns of keys **102.** In other embodiments, the keys **102** can be positioned such they are not arranged as columns. In other embodiments, the number of keys **102** can vary in the individual rows. While the keys **102** have been described as being arranged in rows, in other embodiments the keys **102** can be arranged in other configurations as well. With a simple layout **104,** the keyboard **100** is small enough to be cradled by the user's hands for thumb-typing, but wide enough to be placed on a desktop, a user's lap or other surface for comfortable touch-typing. In other embodiments, more than one alphabetic character can be present on individual keys **102** of the keyboard, **100** thereby further reducing the number of keys **102** required to present a standard layout.

FIG. 3 illustrates an alternative embodiment of the keyboard **100** in which the keyboard **100** is a split keyboard, where the keys **102** are generally divided into halves with a gap-space **114** in between. The gap-space **114** allows the user to more easily actuate the keys **102** on the left-hand side of the gap-space **114** with the left hand and the keys **102** on the right side of the gap-space **114** with the right hand by preventing overlapping of the hands. This can also prevent the user's thumbs from hitting and conflicting with one another, when keys **102** located on opposite sides but adjacent the gap-space **114** are sequentially engaged. For this reason, the gap-space **114** can be advantageously provided with a width that approximates the average user's thumb width and avoids undesirable thumb hits. In at least one embodiment, the gap-space **114** can be about twenty millimeters. The overall width of the keyboard **100** can be approximately one hundred-eighty millimeters in width. The keys **102** on the left-hand side and right-hand side can have the same width, which can be approximately eighty millimeters in width or one side can be larger than the other. While the above examples have been given in relation to the size of the keyboard **100,** gap-space, and total width of each side of keys **102** other examples will be known to those of ordinary skill in the art. For example, the left-hand and right-hand side of keys **102** can have a width ranging from about fifty millimeters to about eighty millimeters. The gap-space **114** can have a width ranging from about ten millimeters to about thirty millimeters. Additionally in at least one example, the keyboard **100** comprises virtual keys on a touch-sensitive screen. The width of the gap-space **114** can be user defined in at least one example. In yet a further example, the width of the right-hand side of keys **102** and left-hand side of keys **102** can also be user defined. The respective width of the gap-space **114** can change in response to the adjustment of the width of the right-hand side of keys **102** and left-hand side of keys **102** or the user can be provided with a setting to select which one of the gap-space **114** or the width of the right-hand side of keys **102** and left-hand side of keys **102** should control the overall dimensions of the keyboard **100** displayed on the touch-sensitive screen.

The keyboard **100** can also include a navigational input key **106** for navigating a cursor on a display screen, scrolling through a menu or webpage, or other similar navigational input. As shown in FIG. 4, the navigational input keys **106** are left and right mouse-type buttons. FIG. 5 shows another type of navigational input key **106,** a trackball assembly. The navigational input **106** is not limited to these types of navigational input keys but can also be a navigation pad, a multi-directional joystick, direction keys, or the like.

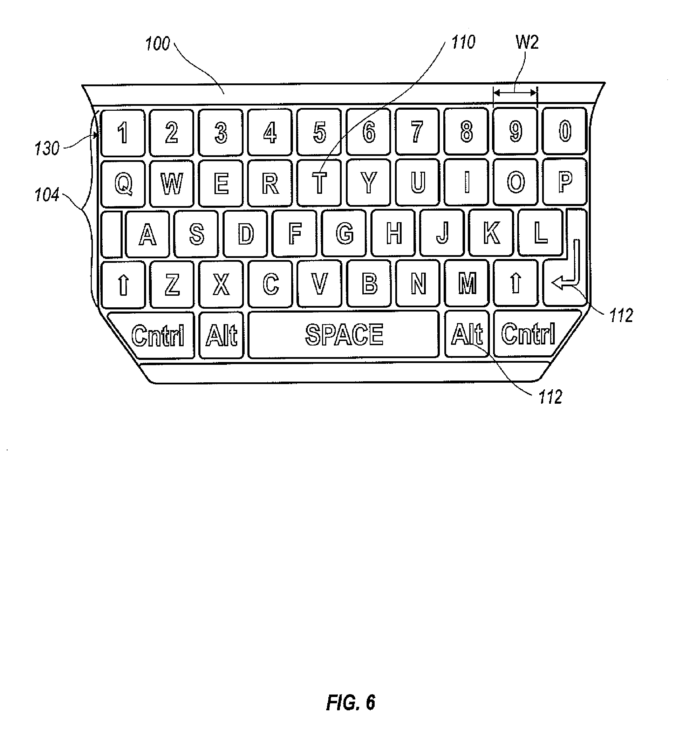

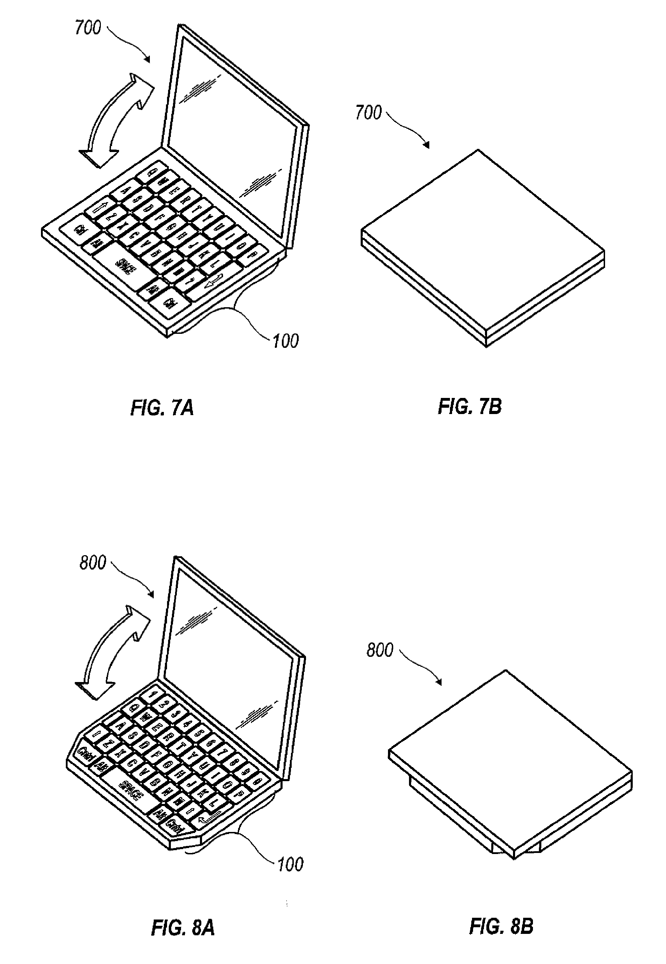

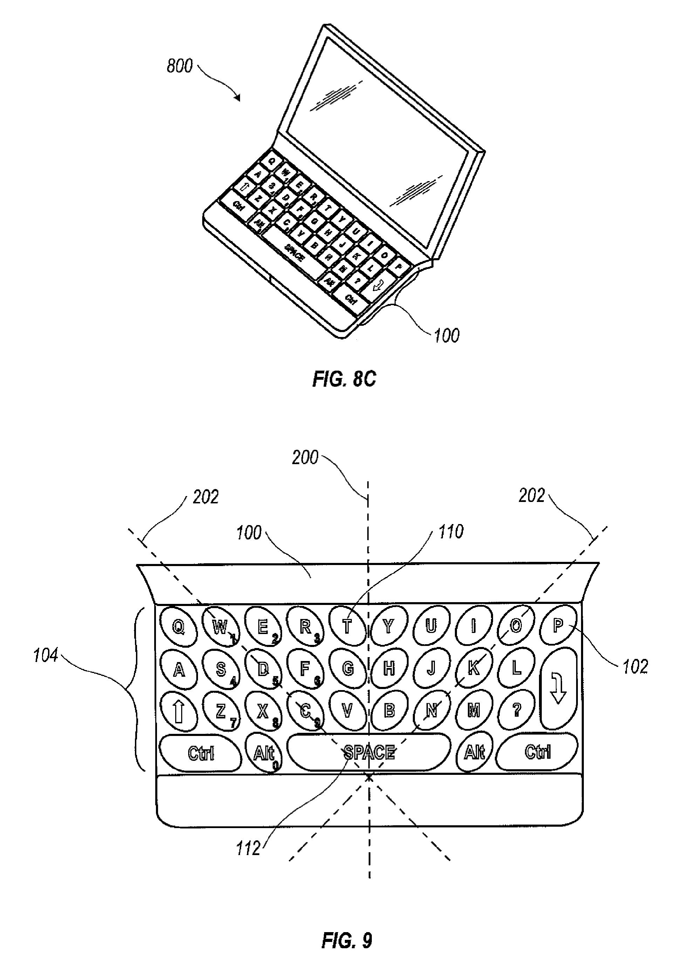

FIG. 6 shows an alternative embodiment of the keyboard **100** where the keyboard **100** is non-rectangular in shape. As depicted, the bottom left and bottom right corners of the keyboard **100** are tapered inwardly. With such tapered corners, the user can easily grip the device when using the keyboard **100** for thumb-typing. The keyboard **100** can also have rounded corners, have tapered lateral sides such that the keyboard **100** is trapezoidal in shape, be circular in shape, or be non-uniform in shape (FIG. 8A-8C). Still referring to FIG. 6, in addition to the rows of keys **102** bearing alphabetic characters **110,** the keyboard **100** can have a top row **130** of keys **102** that bear indicia representing function keys, numerals **108,** command indicia **112,** or the like.

Although it has been described and illustrated herein that the keys **102** are square in shape, they need not be. The keys **102** can also have the shape of a rectangle, a circle, an oval (shown in FIG. 9), a triangle, an oblong figure, or the like. Furthermore, the keys **102** do not need to be arranged in vertically straight columns. Each key **102** has a longitudinal axis **202.** The longitudinal axes **202** of the keys **102** to the left of the vertical centerline **200** of the keyboard **100** can be generally parallel with respect to one another. The longitudinal axes of the keys **102** to the right of the vertical centerline **200** of the keyboard **100** can also be generally parallel with respect to one another. As depicted in FIG. 9, the keys **102** are arranged such that they are not in vertically straight columns. Here, the longitudinal axis **202** of each key **102** to the left of the vertical centerline **200** of the keyboard **100** is tilted at a negative acute angle with respect to the vertical centerline **200** of the keyboard **100.** Also, the longitudinal axis **202** of each key **102** to the right of the vertical centerline **200** of the keyboard **100** is tilted at a positive acute angle with respect to the vertical centerline **200** of the keyboard **100.** This results in an angled key arrangement that facilitates thumb-typing because the keys **102** are arranged along the natural diagonal path a user's thumbs trace during thumb-typing.

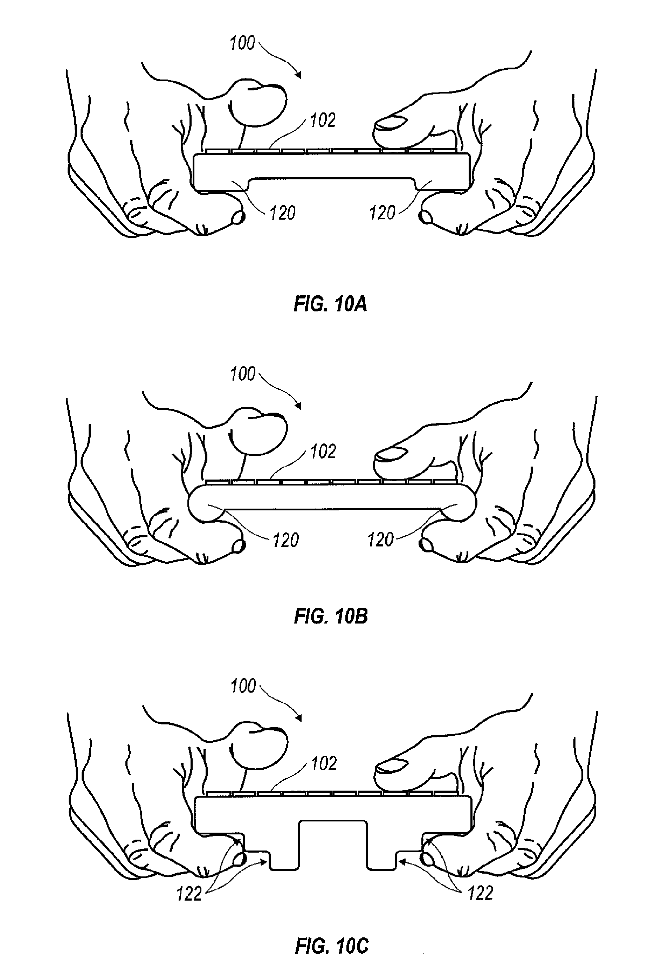

In an alternative embodiment, the keyboard **100** is located at the front face of the device. Additionally, a grip **120** can be attached at the rear face of the device such that it is opposite the keyboard **100** when viewed from the side as shown in FIGS. 10A and 10B. The grip **120** provides wrist support for the user when the device is used for touch-typing and also provides hand support when the device is used for thumb-typing. Also, there can be more than one grip **120** at the rear face of the device. One grip **120** can be placed beneath the keyboard **100** where a user's left hand can grip, and another grip **120** can be placed beneath the keyboard **100** where a user's right hand can grip. These grips **120** can help a user with smaller hands reach distant keys **102.** The grips **120** can be rectangular, square, rounded, or another similar shape that facilitates a comfortable and firm grasp on the keyboard **100.** Instead of grips **120,** indentations can be made at the rear face of the device to act as finger stops **122,** as shown in FIG. 10C. Such finger stops **122** can help position the hands for comfortable thumb-typing.

One skilled in the art will appreciate that the optimized keyboard **100** described herein for handheld thumb-typing and desktop typing can be implemented into devices such as mini-laptops, compact laptops, Personal Digital Assistants (PDAs), handheld communication devices, cellphones, and other compact portable devices capable of handheld use. While the above description has at times referenced a physical key or keyboard, it will also be appreciated that the keyboard **100** can have virtual keys, such as a touch-screen keyboard. When the keyboard is comprised of virtual keys, the indicia and size of the keys can be controlled based upon the display of the virtual keys. For instance, the top row of FIG. 6 could be modified depending on whether numeric entry or additional function keys are desired. Additionally, the layout can be changed based upon region or other application based requirements. Additionally, the virtual keyboard layout could be modified by the user in at least one embodiment.

Exemplary embodiments have been described hereinabove regarding the implementation of an optimized keyboard for handheld thumb-typing and desktop typing on a handheld device. Various modifications to and departures from the disclosed embodiments will occur to those having skill in the art. The subject matter that is intended to be within the spirit of this disclosure is set forth in the following claims.

## Claims

1. A handheld device configured for thumb typing and touch typing, comprising:
a body (700) having a front face and a rear face;
a keyboard (100) at the front face of the body comprising a plurality of keys (102) having alphabetic characters (110) associated therewith, said alphabetic characters (110) arranged in one of a QWERTY layout, an AZERTY layout, a QWERTZ layout, QZERTY layout, and a Dvorak layout;
a portion of said plurality of keys (102) also having numerals (108) associated therewith, said numerals (108) arranged in a telephone keypad layout according to ITU Standard E.161;
said keyboard (100) has a width greater than about 100 millimeters and less than about 160 millimeters, and each of said plurality of keys (102) has a width that is approximately 10 millimeters to 16 millimeters;
said plurality of keys (102) having alphabetic characters (110) being arranged such that a first subset of keys of the plurality of keys (102) on the left side of a vertical centerline (200) of the keyboard (100) can be actuated with a left thumb when the device is held by a user without repositioning cradling hands of the user and a second subset of keys of the plurality of keys (102) on the right side of the vertical centerline (200) of the keyboard (100) can be actuated with a right thumb when the device is held by a user without repositioning the cradling hands of the user; and
said plurality of keys (102) also being positioned such that when the hands of the user are placed on top of the plurality of keys (102), said keys (102) having alphabetic characters (110) can be actuated by the digits of the user without substantially repositioning of hands of the user from a resting position on top of the plurality of keys (102).

2. The handheld device as recited in claim 1, wherein the keyboard (100) is a split keyboard having the plurality of keys (102) with a gap-space (114) between the first subset of keys and the second subset of keys.

3. The handheld device as recited in any of the preceding claims, wherein the keyboard (100) has a non-rectangular shape.

4. The handheld device as recited in any of the preceding claims, wherein the plurality of keys (102) are arranged in a grid having a plurality of rows and a plurality of columns, each of said plurality of rows having ten or fewer keys.

5. The handheld device as recited in any of the preceding claims, further comprising a grip (120) at the rear face of the body such that the grip (120) is positioned opposite the keyboard (100) when the device is held upright.

6. The handheld device as recited in any of the preceding claims, wherein:
each key of the first subset of keys has a longitudinal axis (202), said longitudinal axis (202) tilted at a negative acute angle with respect to the vertical centerline (200) of the keyboard (100); and
each key of the second subset of keys has a longitudinal axis (202), said longitudinal axis (202) tilted at a positive acute angle with respect to the vertical centerline (200) of the keyboard (100).

7. The handheld device as recited in any of the preceding claims, wherein each of said plurality of keys (102) has a height that is approximately 10 millimeters to 16 millimeters.

8. The handheld device as recited in any of the preceding claims, further comprising a navigational input key (106).

9. The handheld device as recited in 8, wherein the navigational input key (106) is one of a trackball assembly, a navigational touchpad, a multi-directional joystick, and navigational buttons.

10. The handheld device as recited in any of the preceding claims, wherein the keyboard (100) is provided on a touch-sensitive display screen.

11. The handheld device as recited in 10, wherein the keyboard (100) is a split keyboard having the plurality of keys with a gap-space (114) between the first subset of keys and the second subset of keys, said gap-space (114) being user defined.

12. A keyboard (100) for a handheld device comprising:
a plurality of keys (102) having alphabetic characters associated therewith, said alphabetic characters (110) arranged in one of a QWERTY layout, an AZERTY layout, a QWERTZ layout, QZERTY layout, and a Dvorak layout;
a portion of said plurality of keys (102) also having numerals (108) associated therewith, said numerals arranged in a telephone keypad layout according to ITU Standard E.161;
said keyboard (100) has a width greater than about 100 millimeters and less than about 160 millimeters, and each of said plurality of keys (102) has a width that is approximately 10 millimeters to 16 millimeters;
said plurality of keys (102) having alphabetic characters (110) being arranged such that a first subset of keys of the plurality of keys (102) on the left side of a vertical centerline (200) of the keyboard (100) can be actuated with a left thumb when the device is held by a user without repositioning cradling hands of the user and a second subset of keys of the plurality of keys (102) on the right side of the vertical centerline (200) of the keyboard (100) can be actuated with a right thumb when the device is held by a user without repositioning the cradling hands of the user; and
said plurality of keys (102) also being positioned such that when the hands of the user are placed on top of the plurality of keys (102), said keys having alphabetic characters (110) can be actuated by the digits of the user without substantially repositioning of hands of the user from a resting position on top of the plurality of keys (102).

## Amended claims

### Amended claims in accordance with Rule 137(2) EPC.

**1.** A keyboard (100) for a handheld device comprising:
a plurality of keys (102) having alphabetic characters associated therewith, said alphabetic characters (110) arranged in one of a QWERTY layout, an AZERTY layout, a QWERTZ layout, QZERTY layout, and a Dvorak layout;
a portion of said plurality of keys (102) also having numerals (108) associated therewith, said numerals arranged in a telephone keypad layout according to ITU Standard E.161;
said keyboard (100) has a width greater than about 100 millimeters and less than about 160 millimeters, and each of said plurality of keys (102) has a width that is approximately 10 millimeters to 16 millimeters;
said plurality of keys (102) arranged to allow thumb-typing; and
said plurality of keys (102) arranged to allow touch-typing.

**2.** The keyboard as recited in claim 1, wherein the keyboard (100) is a split keyboard having the plurality of keys (102) with a gap-space (114) between a first subset of keys on one side of the gap-space (114) and a second subset of keys on another side of the gap-space (114).

**3.** The keyboard as recited in any of the preceding claims, wherein the keyboard (100) has a non-rectangular shape.

**4.** The keyboard as recited in any of the preceding claims, wherein the plurality of keys (102) are arranged in a grid having a plurality of rows and a plurality of columns, each of said plurality of rows having ten or fewer keys.

**5.** The keyboard as recited in any of the preceding claims, wherein the plurality of keys (102) includes a first subset of keys (102) on a left side of a vertical centerline (200) of the keyboard (100) and a second subset of keys (102) on a right side of the vertical centerline (200) of the keyboard (100);
each key of the first subset of keys has a longitudinal axis (202), said longitudinal axis (202) tilted at an acute angle from the vertical centerline (200) of the keyboard (100) to the left side of the keyboard (100); and
each key of the second subset of keys has a longitudinal axis (202), said longitudinal axis (202) tilted at a acute angle from the right side of the keyboard (100) the vertical centerline (200) of the keyboard (100).

**6.** The keyboard as recited in any of the preceding claims, wherein each of said plurality of keys (102) has a height that is approximately 10 millimeters to 16 millimeters.

**7.** The handheld device as recited in any of the preceding claims, wherein the keyboard (100) is provided on a touch-sensitive display screen.

**8.** The keyboard as recited in claim 7, wherein the keyboard (100) is a split keyboard having the plurality of keys with a gap-space (114) between the first subset of keys and the second subset of keys, said gap-space (114) being user defined.

**9.** A handheld device configured for thumb-typing and touch-typing, comprising the keyboard as defined in any preceding claim.

**10.** The handheld device as recited in claim 9, further comprising a grip (120) at the rear face of the body such that the grip (120) is positioned opposite the keyboard (100) when the device is held upright with the grip providing support for the user.

**11.** The handheld device as recited in any of claims 9 to 10, further comprising a navigational input key (106).

**12.** The handheld device as recited in claim 11, wherein the navigational input key (106) is one of a trackball assembly, a navigational touchpad, a multi-directional joystick, and navigational buttons.
